# EUROPÄISCHE PATENTANMELDUNG

(11) **EP 1 281 642 A1**
(43) Veröffentlichungstag der Anmeldung: **05.02.2003**
(21) Anmeldenummer: 01118483.5
(22) Anmeldetag: 01.08.2001
(51) Int. Cl.: B65G 27/32

(54) **Schwingrinne mit Schrittmotor**

(71) Anmelder: Hauers, Manfred, 41749 Viersen (DE); Vits, Dieter, 41470 Neuss (DE)
(72) Erfinder: Hauers, Manfred, 41749 Viersen (DE); Vits, Dieter, 41470 Neuss (DE)
(74) Vertreter: Patentanwälte Hauck, Graalfs, Wehnert, Döring, Siemons, Schildberg

(57) **Zusammenfassung**

Es wird eine Schwingrinne mit einem Rinnenelement, einem Schwingrinnenantrieb und einem Lenkersystem zur Kraftübertragung zwischen Antrieb und Rinnenelement beschrieben. Die Schwingrinne zeichnet sich dadurch aus, daß der Rinnenantrieb einen elektrischen Schrittmotor aufweist. Hierdurch kann die Schwingrinne bei einem einfachen Aufbau eine exakte und beherrschbare Bewegung durchführen.

## Beschreibung

Die vorliegende Erfindung betrifft eine Schwingrinne mit einem Rinnenelement, einem Schwingrinnenantrieb und einem Lenkersystem zur Kraftübertragung zwischen Antrieb und Rinnenelement.

Schwingrinnen gehören zur Gruppe der Schwingförderer, bei denen es sich um Schüttgutförderer für waagerechte oder geneigte Förderung handelt. Allen Schwingförderern gemeinsam ist, daß dem Fördergut durch die Rinne Beschleunigungen erteilt und damit Massenkräfte hervorgerufen werden, die für den Fördervorgang ausgenutzt werden. Man spricht dabei von Schwingrinnen, wenn der Fördervorgang durch eine Wurfphase gekennzeichnet ist. Die Schwingrinnen, also die nach dem Wurfprinzip arbeitenden Schwingförderer, haben heute ein breites Anwendungsgebiet. Hinsichtlich ihres Durchsatzes liegen sie meistens im Gebiet kleinster bis mittlerer Fördermengen. Mit kleinen Durchsätzen werden sie ihrer guten Regulierbarkeit wegen als Dosier- und Zuteilgeräte benutzt. Die Art der Fördergüter reicht vom grobstückigen bis zum pulverförmigen Gut.

Es sind Schwingrinnen bekannt, die Magnetantriebe in Verbindung mit Federn aufweisen, wobei hiermit insbesondere hohe Frequenzen bei kleinen Hüben möglich sind. Bei derartigen Antrieben wirken Elektromagneten auf schräg gestellte Lenker ein, die als Blattfederpakete ausgebildet sind. Infolge der von den Federn entfalteten Eigendynamik sind jedoch derartige Antriebe mit Problemen verbunden. So kommt es am Anfang und Ende der Bewegung infolge der Federeigenschaften in der Regel zu einem unkontrollierten Auslauf, und es bedarf wegen der erforderlichen exakten Abstimmung der Frequenz einer Feinabstimmung der Lenkerfedern und der bewegten Masse, die aufwendig und kostenintensiv ist. Da die Federn neben den ausgeprägten Schwingungen auch Eigenquer- und Eigenlängsschwingungen ausführen, kann es zu großen resultierenden Schwingungen der Schwingrinne, sogenannten Höhenschlägen und Seitenschlägen derselben, kommen. Folglich sind daher die von der Schwingrinne durchgeführten Bewegungen nicht exakt beherrschbar, was sich letztendlich negativ auf die Genauigkeit der mit der Schwingrinne durchgeführten Förderung auswirkt.

Schwingrinnen mit anderen Antriebssystemen haben den Nachteil, daß sie sehr aufwendig ausgestaltet sind und aufgrund der hohen Massenträgheiten der Antriebssysteme (Unwuchtmotoren etc.) ebenfalls keine exakte und eindeutig beherrschbare Bewegung durchführen und nicht exakt gestoppt werden können.

Der Erfindung liegt die Aufgabe zugrunde, eine Schwingrinne der eingangs wiedergegebenen Art zu schaffen, die bei einem einfachen Aufbau eine exakte und beherrschbare Bewegung durchführt.

Diese Aufgabe wird erfindungsgemäß bei einer Schwingrinne der angegebenen Art dadurch gelöst, daß der Schwingrinnenantrieb einen steuerbaren oder regelbaren elektrischen Schrittmotor aufweist, bei dem bestimmte Bewegungsgrößen, wie der Schwenkwinkel, die Schwenkgeschwindigkeit, die Schwenkbeschleunigung und/oder die Schwenkverzögerung, seiner Motorwelle (9) steuerbar oder regelbar sind.

Der erfindungsgemäß eingesetzte elektrische Schrittmotor ermöglicht einen exakten Reversierbetrieb der Schwingrinne, der jederzeit beherrschbar ist. Mit einem derartigen Schrittmotor ist jeder Arbeitszyklus exakt beherrschbar, insbesondere genau beendbar, und es treten keine Nachschwingungserscheinungen auf. Vielmehr ist der erfindungsgemäße Schwingrinnenantrieb immer unter Kontrolle.

Durch die Steuerbarkeit oder Regelbarkeit des Schrittmotors können jederzeit bestimmte Bewegungsgrößen der Motorwelle, wie der Schwenkwinkel, die Schwenkgeschwindigkeit, die Schwenkbeschleunigung und/oder die Schwenkverzögerung, aber auch die Schwenkfrequenz, beliebig verändert und auf einen gewünschten Wert eingestellt werden, ohne daß dazu ein großer Aufwand erforderlich ist. Insbesondere müssen hierzu keine Glieder des Lenkersystems auf den Motor abgestimmt werden. Besondere Vorteile ergeben sich dadurch, daß bei dem elektrischen Schrittmotor während eines Bewegungszyklus der Schwingrinne entsprechende Größen, wie der Schwenkwinkel, die Schwenkgeschwindigkeit, die Schwenkbeschleunigung und/oder die Schwenkverzögerung, veränderbar sind. Durch diese Verstellmöglichkeiten innerhalb eines Arbeitszyklus kann mit der Schwingrinne innerhalb eines Arbeitszyklus sowohl eine hohe als auch eine kleine Förderleistung eingestellt werden.

Mit dem erfindungsgemäß verwendeten Schrittmotor kann somit beim Beschleunigen gezielt hochgefahren und gezielt verzögert und positioniert werden. Es gelingt, in einer gewünschten bestimmten Stellung exakt zu stoppen, ohne daß Nachlauf- bzw. Nachschwingungserscheinungen auftreten.

Ein weiterer Vorteil besteht darin, daß derartige Schrittmotoren auf dem Markt verfügbar und kostengünstig sind. Beispielsweise besitzt ein üblicher Schrittmotor eine Schrittweite (Schwenkwinkel) von etwa 1,8°, wobei diese Schrittweite auf ein Vielfaches dieses Betrages oder einen Teil dieses Betrages gesteuert werden kann.

Der elektrische Schrittmotor ist vorzugsweise so ausgebildet, daß er programmierbar ist. Mit anderen Worten, die vorgesehene Steuer- oder Regelbarkeit wird auf programmtechnische Weise bewerkstelligt. Auf diese Weise läßt sich beispielsweise ein Übergang von hoher Förderleistung auf eine niedrige Förderleistung innerhalb eines Arbeitsganges durchführen, und es können Veränderungen der Amplituden, Beschleunigungen und Frequenzen vorgenommen werden.

Eine bevorzugte Ausführungsform der Erfindung zeichnet sich dadurch aus, daß der Schrittmotor im Reversierbetrieb betreibbar ist. Diese Ausführungsform der Erfindung findet insbesondere bei kleineren Amplituden (Fördermengen) Verwendung. Bei größeren Amplituden (größeren Fördermengen) findet vorzugsweise ein Schrittmotor Verwendung, der im Umlaufbetrieb betreibbar ist. Für die Auswahl der speziellen Betriebsart können Motorleistungsgründe ausschlaggebend sein. Auch bei größeren Amplituden und einem umlaufenden Betrieb des Schrittmotors ist ein exaktes Stoppen und eine genaue Positionierung möglich.

Eine weitere Ausführungsform der Erfindung sieht vor, daß der Schrittmotor eine Gegenmasse mit antreibt. Diese Variante der Erfindung kann zum Einsatz kommen, wenn ein besonders ruhiger Lauf gewünscht wird.

Bei der erfindungsgemäß ausgebildeten Schwingrinne findet zweckmäßigerweise ein aus starren Lenkern bestehendes Lenkersystem Verwendung. Beeinflussungen des Förderverhaltens der Schwingrinne durch eine vom Lenkersystem entwickelte Eigendynamik sind daher nicht möglich.

Konstruktiv ist die Schwingrinne vorzugsweise so ausgebildet, daß der Schrittmotor eine schräg zur Schwingrinnenelementebene verlaufende Antriebswelle aufweist. Hierdurch kann die Schwingrinne die gewünschte Wurfbewegung des Fördergutes erzeugen.

Vorteilhafterweise wird erfindungsgemäß ein Lenkersystem verwendet, das eine an einem Schwingrinnengehäuse gelagerte Welle mit einem unteren und einem oberen fest damit verbundenen Hebel aufweist, wobei der obere Hebel am Schwingrinnenelement angreift und der untere Hebel über einen Lenker mit einem Exzenter verbunden ist, der auf der Antriebswelle des Schrittmotors angeordnet ist. Die Schwenkbewegung der Schrittmotorwelle wird somit über den Lenker auf den unteren Hebel und von dort über die Welle und den oberen Hebel auf das Schwingrinnenelement übertragen. Zweckmäßigerweise ist ein zweiter oberer Hebel vorgesehen, der mit einer anderen Stelle des Schwingrinnenelementes verbunden ist und Führungsfunktionen übernimmt.

Die Schwingrinne kann zusätzlich ein oder mehrere nichtangetriebene Führungshebel besitzen, um beispielsweise eine zusätzliche Lagerung derselben zu erreichen.

Die erfindungsgemäß ausgebildete Schwingrinne ist vorzugsweise Teil einer Waage für eine Verpackungsmaschine. Eine solche Waage (Computerwaage) besitzt eine Vielzahl von radial angeordneten Schwingrinnen, die von einem zentralen Einfülltrichter das Wägegut erhalten und dieses in Vorsammelschalen führen, aus denen das Wägegut in Wägeschalen eingeführt wird. Derartige Waagen sind bekannt. Durch die erfindungsgemäß ausgebildeten Schwingrinnen können bei derartigen Waagen die Wartungsarbeiten wesentlich verringert werden (es entfallen Feinabstimmungsarbeiten der Lenkerfedern, insbesondere bei Änderung der Schwingmasse), und die Genauigkeit und Leistung der Waage können weiter erhöht werden.

Die Erfindung wird nachfolgend anhand von Ausführungsbeispielen in Verbindung mit der Zeichnung im einzelnen erläutert. Es zeigen:
- Figur 1: eine Seitenansicht einer mit einer Vielzahl von Schwingrinnen versehenen Waage für eine Verpackungsmaschine;
- Figur 2: einen Vertikalschnitt durch eine Schwingrinne mit zugehörigem Antrieb;
- Figur 3: einen Schnitt entlang Linie A-B in Figur 2;
- Figur 4: einen Schnitt enlang Linie C-D in Figur 2;
- Figur 5: einen Vertikalschnitt durch eine weitere Ausführungsform einer Schwingrinne mit zugehörigem Antrieb;
- Figur 6: eine Draufsicht auf den Antrieb;
- Figur 7: einen Schnitt entlang Linie A-B in Figur 5;
- Figur 8: einen Schnitt entlang Linie C-D in Figur 5; und
- Figur 9: einen Schnitt entsprechend Figur 2 noch einer weiteren Ausführungsform.

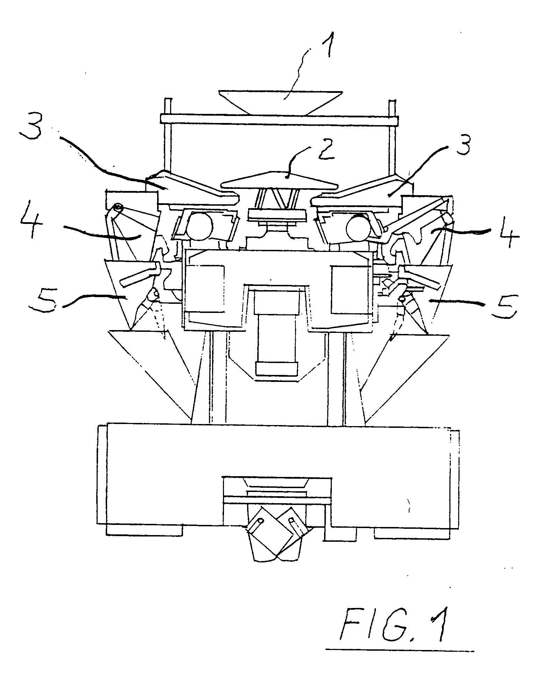

Die in Figur 1 gezeigte Waage für eine Verpackungsmaschine besitzt einen Einfülltrichter 1, dem das Wägegut über eine Zuführrinne (nicht gezeigt) zugeführt wird. Ein zentraler Produktverteiler 2 unter dem Einfülltrichter 1 teilt das Wägegut radial angeordneten Schwingrinnen 3 zu. Es sind insgesamt beispielsweise vierzehn radiale Schwingrinnen 3 angeordnet, die eine entsprechende Zahl von Vorsammelschalen 4 versorgen. Die Schwingrinnen 3 erhalten eine produktund gewichtsspezifische Grundeinstellung, die sich automatisch auf die gewünschte Leistung hin regelt und Produktschwankungen auffängt. Das Wägegut wird so lange in der Vorsammelschale 4 bereitgestellt, bis es von der zugehörigen Wägeschale 5 abgerufen wird. Gleichzeitig läuft dann auch die Schwingrinne 3 wieder an und sorgt für die neue Füllung der Vorsammelschale 4. Über eine Prozeßrechner-Steuerung wird die Teilgewichte-Kombination ermittelt und abgerufen, die dem Sollgewicht entspricht oder am nächsten kommt. Der eigentliche Wägevorgang wird von vierzehn Wägezellen 6 vorgenommen.

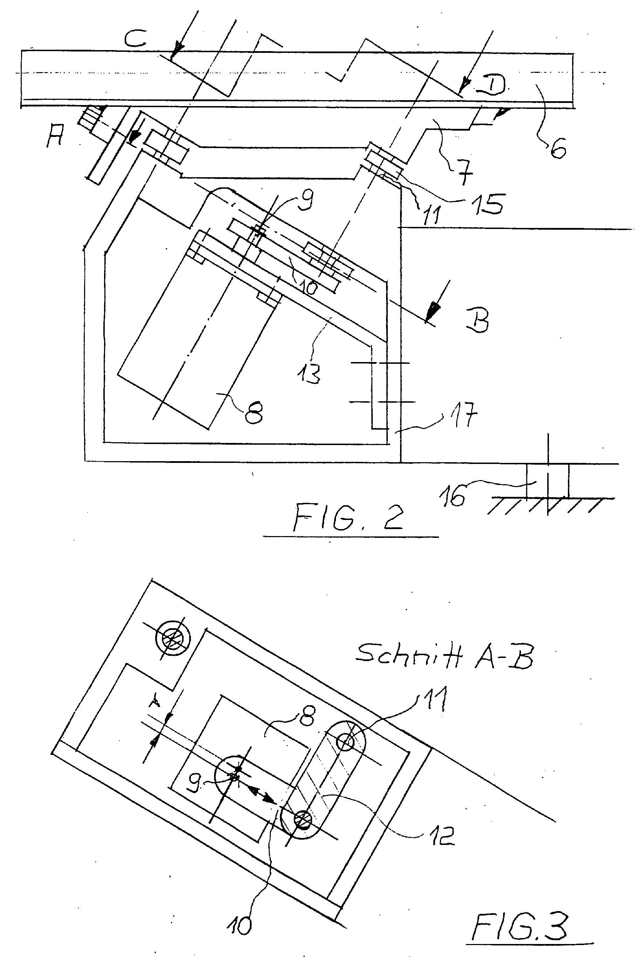

Figur 2 zeigt schematisch einen Schnitt durch eine Schwingrinne mit zugehörigem Antrieb. Die Schwingrinne besitzt ein Schwingrinnenelement 6, das zur Aufnahme des zu fördernden Gutes (Wägegut) zur Förderung desselben dient. Das Schwingrinnenelement 6 ist auf einem Unterbau 7 angeordnet. Der Antrieb für das Schwingrinnenelement 6 weist einen elektrischen Schrittmotor 8 auf, der im Reversierbetrieb betrieben wird und schräg zur Schwingrinnenelementebene an einem Bügel 13 eines Antriebsgehäuses 17 befestigt ist, welches wiederum über Gummipuffer 16 elastisch gelagert ist. Somit verläuft auch die Schrittmotorwelle 9 schräg zur Ebene des Schwingrinnenelementes. Die Motorwelle 9 ist über einen Exzenter r mit einem Lenker 10 verbunden, der die von der Welle ausgeführte Drehbewegung auf einen Hebel 12 (in Figur 3 gezeigt) überträgt. Der Hebel 12 ist fest mit einer in der Ebene der Figur 2 verlaufenden Welle 11 verbunden, die an ihrem oberen Ende einen oberen Hebel 15 aufweist, der parallel zum unteren Hebel 12 verläuft und ebenfalls fest mit der Welle 11 verbunden ist. Dieser obere Hebel 15 ist mit dem Unterbau 7 des Schwingrinnenelementes 6 verbunden. Eine von der Motorwelle 9 ausgeführte Schwenkbewegung hin und zurück bewirkt somit eine angenäherte Linearbewegung des Schwingrinnenelementes in Figur 2 nach links oben und zurück nach rechts unten, wodurch dem entsprechenden Fördergut eine Wurfbewegung mitgeteilt wird.

Der Schrittmotor 8 ist so steuerbar, daß der Schwenkwinkel, die Schwenkfrequenz und die Schwenkgeschwindigkeit bzw. Schwenkbeschleunigung eingestellt und sogar während eines Arbeitszyklus beliebig verändert werden können. Hierzu ist eine geeignete Steuereinheit für den Schrittmotor 8 vorgesehen, die in der Figur nicht gezeigt ist.

Es versteht sich, daß auch ein Schrittmotor verwendet werden kann, der im Umlaufbetrieb gefahren wird. Auch kann die nichtgezeigte Steuereinheit den Motor vom Reversierbetrieb auf Umlaufbetrieb umsteuern, beispielsweise in Abhängigkeit von den gewünschten Amplituden.

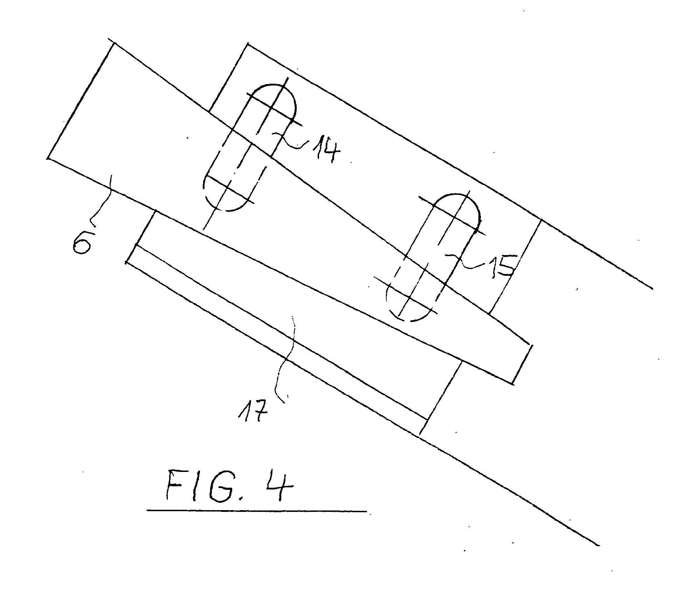

Die Figuren 3 und 4 zeigen den Antrieb der Schwingrinne entlang den Schnitten A-B und C-D in Figur 2. In Figur 4 ist ein Führungshebel 14 zu erkennen, der wie die Welle 11 im Antriebsgehäuse 17 gelagert ist und eine Führungsbewegung ausführt, die der Antriebsbewegung des oberen Hebels 15 entspricht.

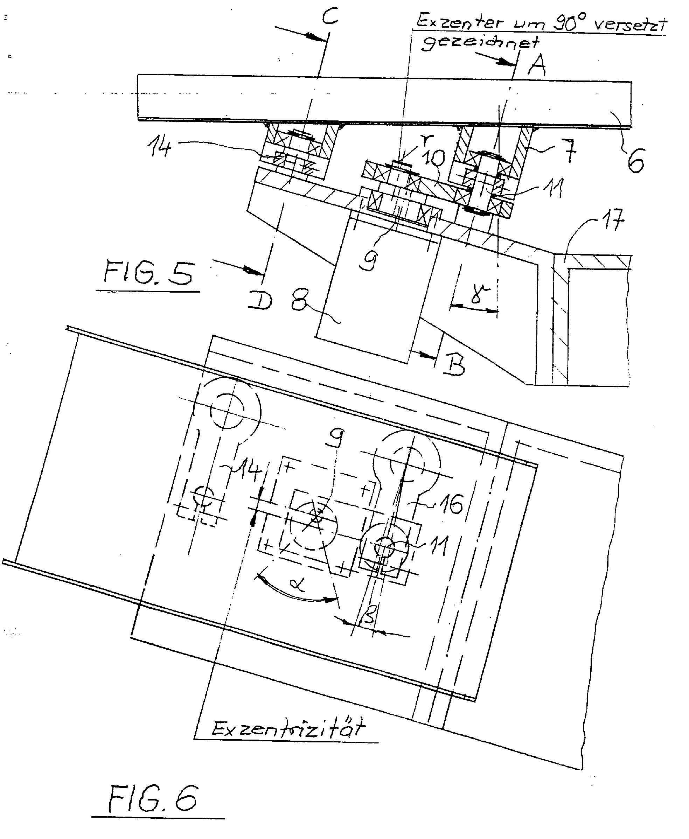

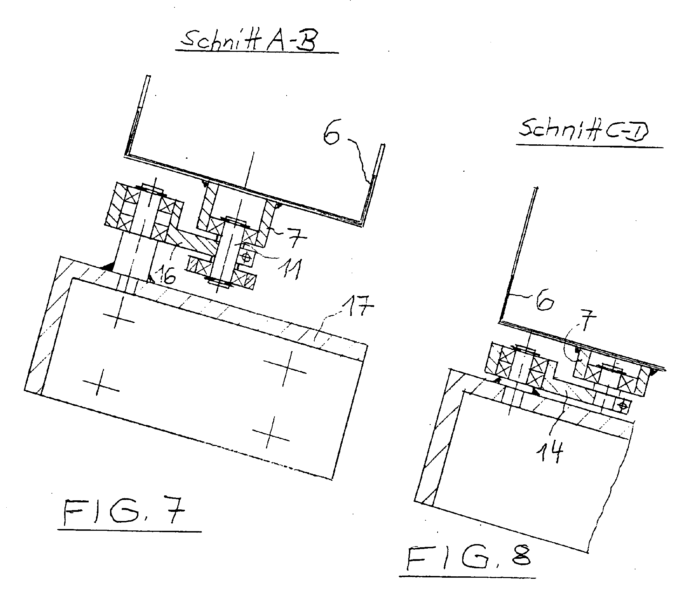

Die Figuren 5 bis 8 zeigen eine weitere Ausführungsform einer Schwingrinne mit zugehörigem Antrieb. Auch bei dieser Ausführungsform ist ein elektrischer Schrittmotor 8 schräg zu einem Schwingrinnenelement 6 an einem Schwingrinnengehäuse 17 befestigt. Der Motor weist eine Antriebswelle 9 auf, an der ein Exzenter r angeordnet ist. Mit dem Exzenter steht ein Lenker 10 in Verbindung, der an seinem anderen Ende mit einer an einem Führungsarm 16 gelagerten Welle 11 verbunden ist, welche an ihrem oberen Ende direkt am Führungsrinnenelement 6 gelagert ist. Eine Drehbewegung des von der Antriebswelle des Motors bewegten Exzenters führt somit zu einer angenäherten linearen Hin- und Herbewegung des Schwingrinnenelementes 6. Auch bei dieser Ausführungsform ist ein zusätzlicher Führungshebel 14 für das Schwingrinnenelement vorgesehen.

In Figur 6 sind die jeweiligen Schwenkwinkel der Motorantriebswelle 9 mit α und der Welle 11 mit β gekennzeichnet.

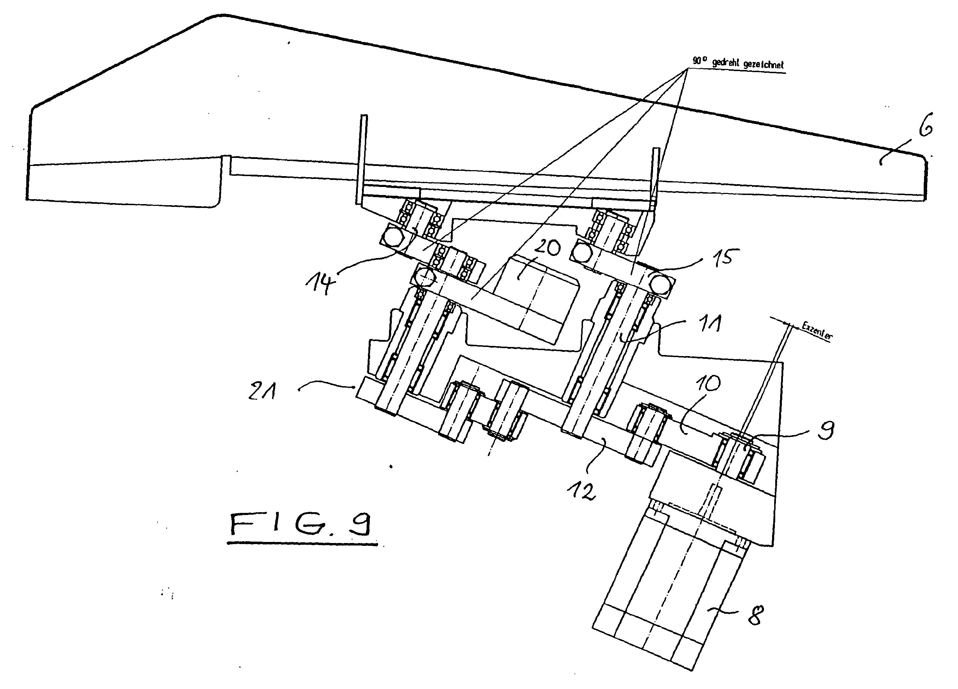

Figur 9 zeigt einen Schnitt entsprechend Figur 2 durch noch eine weitere Ausführungsform einer Schwingrinne. Gleiche oder ähnliche Teile wie in Figur 2 sind hierbei mit identischen Bezugszeichen versehen. Der Schrittmotor 8 treibt ebenfalls über seine Welle 9 mit Exzenter einen Lenker 10 an, der eine entsprechende reversierende Schwenkbewegung (oder umlaufende Schwenkbewegung) in einzelnen Schritten durchführt. Der Lenker 10 überträgt die Schwenkbewegung auf den Hebel 12 der Welle 11, die die Schwingrinne 6 in der vorstehend beschriebenen Weise antreibt. Bei dieser Ausführungsform ist der Hebel ebenfalls fest mit der Welle 11 verbunden und über diese hinaus verlängert. Er treibt über ein entsprechendes Lenkersystem 21, das in einem im Antriebsgehäuse gelagerten Führungshebel 14 endet, eine Gegenmasse 20 an, und zwar entgegen der auf die Schwingrinne übertragenen Schwenkbewegung. Die Gegenmasse 20 sorgt somit für einen ruhigen Lauf. Wie erwähnt, endet das für die Gegenmasse vorgesehene zweite Lenkersystem 21 im Führungshebel 14, der eine der Antriebsbewegung des oberen Hebels 15 entsprechende Führungsbewegung ausführt, jedoch selbst nicht angetrieben ist. Diese Ausgestaltung ist nicht zwingend.

## Patentansprüche

1. Schwingrinne mit einem Rinnenelement, einem Schwingrinnenantrieb und einem Lenkersystem zur Kraftübertragung zwischen Antrieb und Rinnenelement, **dadurch gekennzeichnet, daß** der Schwingrinnenantrieb einen steuerbaren oder regelbaren elektrischen Schrittmotor (8) aufweist, bei dem bestimmte Bewegungsgrößen, wie der Schwenkwinkel, die Schwenkgeschwindigkeit, die Schwenkbeschleunigung und/oder die Schwenkverzögerung, seiner Motorwelle (9) steuerbar oder regelbar sind.

2. Schwingrinne nach Anspruch 1, **dadurch gekennzeichnet, daß** der Schrittmotor (8) im Reversierbetrieb betreibbar ist.

3. Schwingrinne nach Anspruch 1, **dadurch gekennzeichnet, daß** der Schrittmotor (8) im Umlaufbetrieb betreibbar ist.

4. Schwingrinne nach einem der vorangehenden Ansprüche, **dadurch gekennzeichnet, daß** der Schrittmotor (8) eine Gegenmasse (20) mit antreibt.

5. Schwingrinne nach einem der vorangehenden Ansprüche, **dadurch gekennzeichnet, daß** das Lenkersystem ein aus starren Lenkern bestehendes System ist.

6. Schwingrinne nach einem der vorangehenden Ansprüche, **dadurch gekennzeichnet, daß** der Schrittmotor (8) eine schräg zur Schwingrinnenelementebene verlaufende Abtriebswelle (9) aufweist.

7. Schwingrinne nach einem der vorangehenden Ansprüche, **dadurch gekennzeichnet, daß** das Lenkersystem eine an einem Schwingrinnengehäuse gelagerte Welle (11) mit einem unteren und einem oberen fest damit verbundenen Hebel (12, 15) aufweist, wobei der obere Hebel (15) am Schwingrinnenelement (6) angreift und der untere Hebel (12) über einen Lenker (10) mit einem Exzenter (r) verbunden ist, der auf der Antriebswelle (9) des Schrittmotors (8) angeordnet ist.

8. Schwingrinne nach einem der Ansprüche 1-6, dadurch gekennzeichent, daß die Antriebswelle des Schrittmotors über einen Exzenter direkt mit dem Rinnenelement verbunden ist.

9. Schwingrinne nach einem der Ansprüche 1-6, **dadurch gekennzeichnet, daß** die Antriebswelle des Schrittmotors über einen Zahnstangenantrieb mit dem Rinnenelement verbunden ist.

10. Schwingrinne nach einem der Ansprüche 1-6, **dadurch gekennzeichnet, daß** die Antriebswelle des Schrittmotors über einen Zahnriemenantrieb mit dem Rinnenelement verbunden ist.

11. Schwingrinne nach einem der vorangehenden Ansprüche, **dadurch gekennzeichnet, daß** sie einen nichtangetriebenen Führungshebel (14) aufweist.

12. Schwingrinne nach einem der vorangehenden Ansprüche, **dadurch gekennzeichnet, daß** sie Teil einer Waage für eine Verpackungsmaschine ist.
